# EUROPEAN PATENT APPLICATION

(11) **EP 3 726 718 A1**
(43) Date of publication of application: **21.10.2020**
(21) Application number: 19170393.3
(22) Date of filing: 19.04.2019
(51) Int. Cl.: H02M 7/00, H01F 30/06, H01F 27/04, H01F 27/29

(54) **IMPROVEMENTS IN OR RELATING TO HVDC CONVERTER STATIONS**

(71) Applicant: General Electric Technology GmbH, 5400 Baden (CH)
(72) Inventor: MAHALINGAM, Muthukumar, STAFFORD, ST16 1WS (GB); MUNSHI, Shabar, Mustafa, STAFFORD, ST16 1WS (GB)
(74) Representative: Brevalex

(57) **Abstract**

In the field of high voltage direct current (HVDC) power transmission, a single-phase three-winding converter transformer (22), for connection with a converter (14) in a valve hall (12) of a HVDC converter station (10), comprises a first side (36) which in use faces the valve hall (12). First and second star bushings (38, 40) protrude from the first side (36) and are connectable in use to one or more further converter transformers (22) and the converter (14) in a star configuration. First and second delta bushings (42, 44) protrude also from the first side (36) and are connectable in use to one or more further converter transformers (22) and the converter (14) in a delta configuration. The first and second star bushings (38, 40) are spaced diagonally relative to one another on the first side (36), and the first and second delta bushings (42, 44) are spaced diagonally relative to one another on the first side (36).

## Description

This invention relates to a single-phase three-winding converter transformer for connection with a converter in a valve hall of a high voltage direct current (HVDC) converter station, and to a HVDC converter station including one or more such converter transformers.

In HVDC power transmission networks alternating current (AC) power is typically converted to direct current (DC) power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion between DC power and AC power is utilized in power transmission networks where it is necessary to interconnect the DC and AC networks. In any such power transmission network, converters are required at each interface between AC and DC power to effect the required conversion from AC to DC or from DC to AC. Such converters are typically located within a valve hall of a HVDC converter station which includes other ancillary equipment, such as one or more converter transformers, to further facilitate the required power conversion.

According to a first aspect of the invention there is provided a single-phase three-winding converter transformer, for connection with a converter in a valve hall of a HVDC converter station, the converter transformer comprising:
a first side which in use faces the valve hall;
first and second star bushings protruding from the first side and being connectable in use to one or more further converter transformers and the converter in a star configuration; and
first and second delta bushings protruding also from the first side and being connectable in use to one or more further converter transformers and the converter in a delta configuration,
the first and second star bushings being spaced diagonally relative to one another on the first side, and
the first and second delta bushings being spaced diagonally relative to one another on the first side.

Spacing both the first and second star bushings, and the first and second delta bushings, diagonally relative to one another on the first side of the converter transformer, e.g. as contrast to spacing the respective pairs of star and delta bushing vertically or horizontally relative to one another on the first side, advantageously reduces the number of bushing connections required in use to interconnect the converter transformer of the invention with one or more other converter transformers and a converter in an operative manner, and thereby provides for a reduction in the overall footprint of an associated HVDC converter station within which the said converter transformer of the invention is utilised. Having such a reduced overall footprint is, in turn, desirable because it reduces the total cost of the HVDC converter station.

Preferably the first star bushing lies above and to the left of the second star bushing, and the first delta bushing lies above and to the right of the second delta bushing, when viewed from opposite the first side of the converter transformer.

The first star bushing may lie above and to the right of the second star bushing, and the first delta bushing may lie above and to the left of the second delta bushing, when viewed from opposite the first side of the converter transformer.

Optionally the second star bushing lies above and to the left of the first star bushing, and the second delta bushing lies above and to the right of the first delta bushing, when viewed from opposite the first side of the converter transformer.

In another preferred embodiment of the invention the second star bushing lies above and to the right of the first star bushing, and the second delta bushing lies above and to the left of the first delta bushing, when viewed from opposite the first side of the converter transformer.

Each of the foregoing configurations beneficially gives rise to the aforementioned reduction in the required number of bushing connections, and the consequential reduction in the overall footprint of the converter station with which the converter transformer is, in use, associated.

Preferably the first side of the converter transformer extends vertically relative to a support surface upon which the converter transformer in use lies, and at least one of the first and second star bushings and the first and second delta bushings protrudes at an angle within one or both of a vertical and a horizontal plane relative to the first side.

In another preferred embodiment of the invention all of the bushings protrude at an angle within one or both of a vertical and a horizontal plane relative to the first side of the converter transformer.

Such arrangements are advantageous because they further assist in optimising the bushing connections required for the converter transformer of the invention in a manner which reduces the overall volume required by them.

Optionally the first side of the converter transformer extends vertically relative to a support surface upon which the converter transformer in use lies, and at least one of the first and second star bushings and the first and second delta bushings protrudes perpendicularly relative to the first side.

In a preferred embodiment of the invention all of the bushings protrude perpendicularly from the first side of the converter transformer.

Such arrangements are advantageous because they simplify manufacture of the converter transformer.

Optionally one or more of the bushings in use extends into an associated valve hall.

Having one or more bushings so extend permits the bushing connections required to interconnect the converter transformer of the invention with other converter station equipment to be housed within the valve hall in which the converter is located, and so provides for a reduction on the overall footprint of the valve hall, which again has beneficial cost implications.

According to a second aspect of the invention there is provided a HVDC converter station comprising a valve hall within which is housed a converter having at least one single-phase three-winding converter transformer connected therewith, the at least one converter transformer including:
a first side which faces the valve hall;
first and second star bushings protruding from the first side, the said star bushings being connected with the converter and connectable to one or more further converter transformers in a star configuration; and
first and second delta bushings protruding also from the first side, the said delta bushings being connected with the converter and connectable to one or more further converter transformers in a delta configuration,
the first and second star bushings being spaced diagonally relative to one another on the first side, and
the first and second delta bushings being spaced diagonally relative to one another on the first side.

The inclusion of at least one such converter transformer in a HVDC converter station of the invention allows the converter station to have a reduced overall footprint compared to conventional converter stations, and so helps to reduce the total cost of the converter station.

In a still further preferred embodiment of the invention the converter has three single-phase three-winding converter transformers connected therewith, each converter transformer including:
a first side which faces the valve hall;
first and second star bushings protruding from the first side, the said star bushings being connected with the converter and both of the other converter transformers in a star configuration; and
first and second delta bushings protruding also from the first side, the said delta bushings being connected with the converter and both of the other converter transformers in a delta configuration,
the first and second star bushings being spaced diagonally relative to one another on the first side, and
the first and second delta bushings being spaced diagonally relative to one another on the first side.

Such a converter station, and more particularly the inclusion therein of three of the said single-phase three-winding converter stations, provides for such a station that has an optimally reduced overall footprint, and hence minimum cost.

There now follows a brief description of a preferred embodiment of the invention, by way of non-limiting example, with reference being made to the following figures in which:
Figure 1 shows a schematic view of a HVDC converter station according to a first embodiment of the invention;
Figure 2 shows an elevational view from opposite a first side of a converter transformer according to a second embodiment of the invention;
Figure 3(a) illustrates schematically the configuration of star and delta bushings on the first side of the converter transformer shown in Figure 2;
Figure 3(b) illustrates schematically the configuration of star and delta bushings on the first side of a converter transformer according to a third embodiment of the invention;
Figure 3(c) illustrates schematically the configuration of star and delta bushings on the first side of the converter transformer according to a fourth embodiment of the invention;
Figure 3(d) illustrates schematically the configuration of star and delta bushings on the first side of the converter transformer according to a fifth embodiment of the invention;
Figure 4 shows a schematic, isometric view of a HVDC converter station according to a sixth embodiment of the invention which includes three of the converter transformers shown in Figure 3(b); and
Figure 5 shows an elevational view from second side, adjacent the first side, of the converter transformer shown in Figure 2.

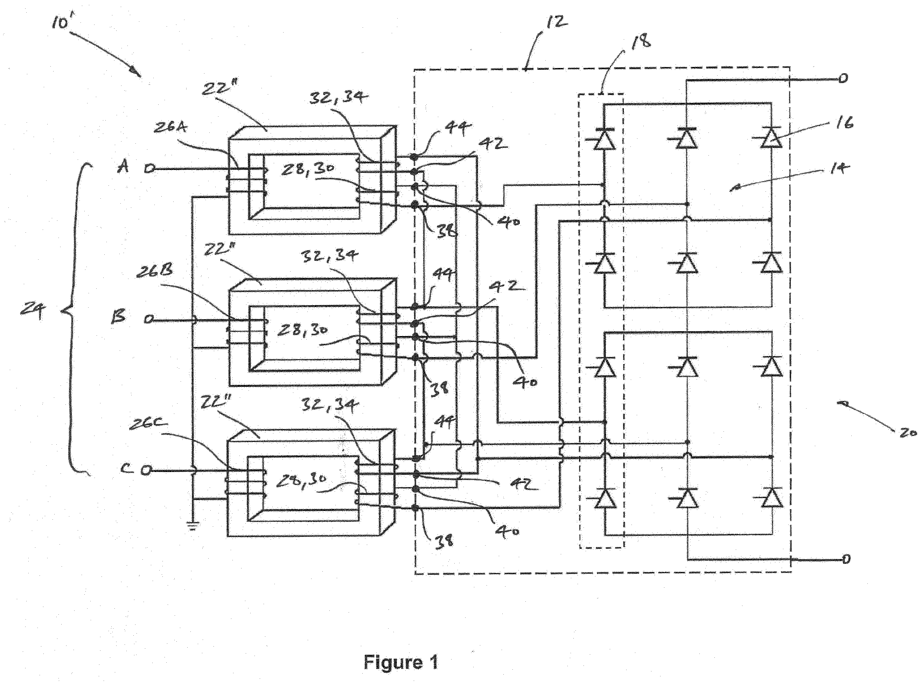

A HVDC converter station according to a first embodiment of the invention is shown schematically in Figure 1.

The first converter station 10^{I} includes a valve hall 12 within which is located a converter 14. In the example shown, the converter 14 is a line commutated converter which includes twelve thyristor valves 16, each of which is formed from a plurality of thyristors (not shown) connected in series, and which are arranged in a known quadrivalve 18 arrangement. Other embodiments of the invention may include a different type of converter, and/or a converter having a different configuration of valves.

In any event, the converter 14 is connected to a DC network 20.

The first converter station 10^{I} additionally includes three single-phase three-winding converter transformers 22^{II} according to a second embodiment of the invention.

Each converter transformer 22^{II} steps up the voltage of one phase A, B, C of an AC network 24, and to that end includes a first winding 26A, 26B 26C which is connected with a corresponding phase A, B, C of the AC network 24.

Each converter transformer 22^{II} further includes a second winding 28 in the form of a star winding 30, and a third winding 32 in the form of a delta winding 34. The star and delta windings 30, 34 of the respective converter transformers 22^{II} are interconnected with one another and with the converter 14 in corresponding star and delta configurations, as shown schematically in Figure 1.

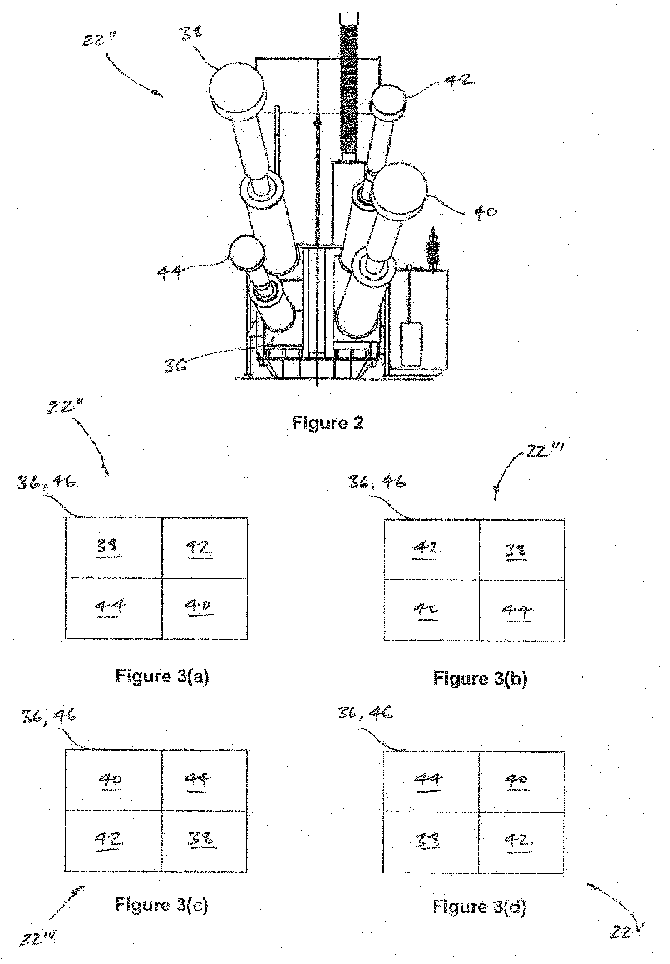

More particularly, each converter transformer 22^{II} includes a first side 36, e.g. as shown in Figure 2, which faces the valve hall 12, and from which protrudes (i) first and second star bushings 38, 40 that facilitate the aforementioned star connection between the converter transformers 22 and the converter 14, and (ii) first and second delta bushings 42, 44 that facilitate the aforementioned delta connection between the converter transformers 22 and the converter 14.

As shown in Figure 2, the first and second star bushings 38, 40 in each converter transformer 22^{II} are spaced diagonally relative to one another on the first side 36 of the converter transformer 22^{II}, and the first and second delta bushings 38, 40 are also spaced diagonally relative to one another on the first side 36.

More particularly, if representing the four possible positions of each bushing 38, 40, 42, 44 on a 4-quadrant grid 46 lying coincident with the first side 36 of each converter transformer 22^{II}, the first star bushing 38 lies above and to the left of the second star bushing 40, and the first delta bushing 42 lies above and to the right of the second delta bushing 44, when viewed from opposite the first side 36, i.e. as shown schematically in Figure 3(a).

In another converter transformer 22^{III} according to a third embodiment of the invention, and adopting a similar 4-quadrant grid 46 representation to that mentioned above, the first star bushing 38 may instead lie above and to the right of the second star bushing 40, and the first delta bushing 42 may instead lie above and to the left of the second delta bushing 44, when again viewed from opposite the first side of the converter transformer 22^{III}, i.e. as shown schematically in Figure 3(b).

In a further converter transformer 22^{IV} according to a fourth embodiment of the invention, the second star bushing 40 may lie above and to the left of the first star bushing 38, and the second delta bushing 44 may lie above and to the right of the first delta bushing 42, when viewed from opposite the first side 36 of the converter transformer 22, i.e. as shown schematically in Figure 3(c).

In a still further converter transformer 22^{V} according to a fifth embodiment of the invention, the second star bushing 40 may lie above and to the right of the first star bushing 38, and the second delta bushing 44 may lie above and to the left of the first delta bushing 42, when viewed from opposite the first side 36 of the converter transformer 22^{V}, i.e. as shown schematically in Figure 3(d).

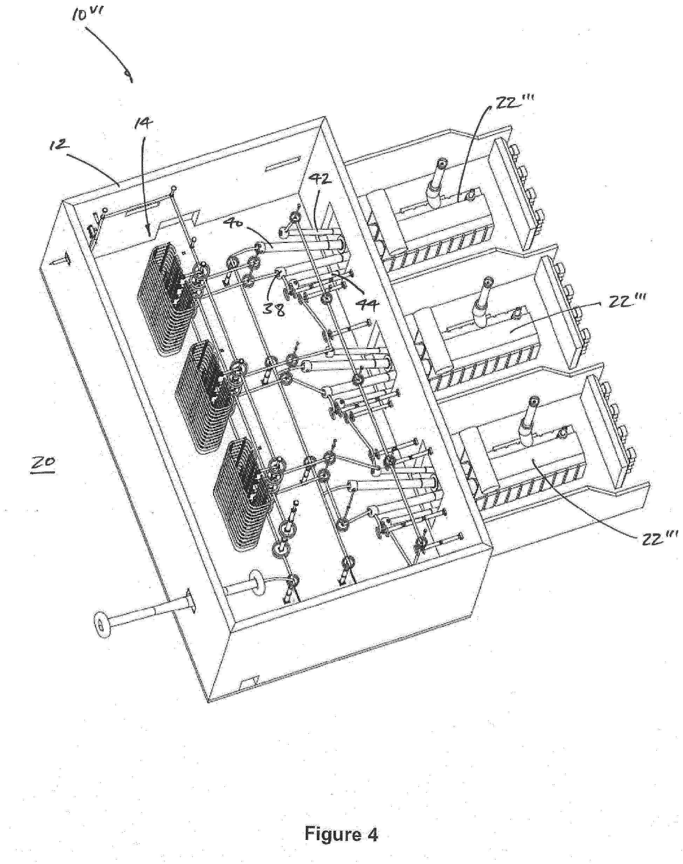

As a result of arranging the bushings in any one of the foregoing manners, it is possible to reduce the number of bushing connections required, in use, to interconnect the converter transformer of the invention with other converter transformers and a converter in an operative manner, and thereby gives rise to a reduction in the overall footprint of an associated HVDC converter station within which the said converter transformer of the invention is utilised, e.g. as illustrated in Figure 4 which shows a HVDC converter station 10^{VI} according to a sixth embodiment of the invention that includes three converter transformers 26^{III} according to the third embodiment of the invention.

In addition to the foregoing, each converter transformer 22^{II}, 22^{III}, 22^{IV}, 22^{V} is preferably still further configured as follows.

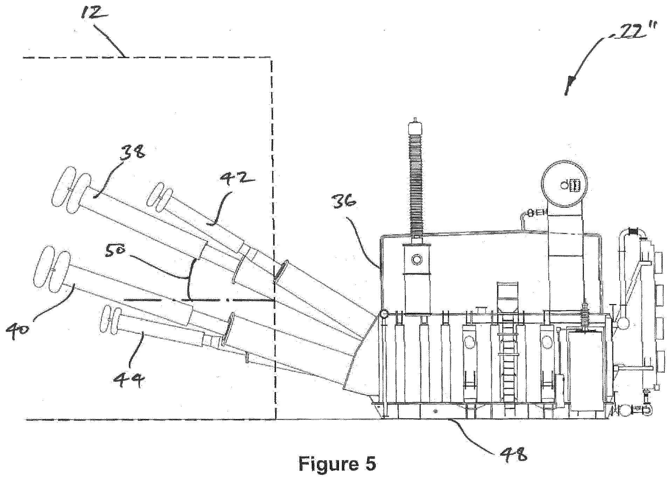

With reference to the converter transformer 22^{II} according to the second embodiment of the invention, the first side 36 thereof extends substantially vertically relative to a support surface 48 upon which the converter transformer 22^{II} in use lies, and each of the first and second star bushings 38, 40 and the first and second delta bushings 42, 44 protrudes at an angle within a vertical plane relative to the first side 36, as shown most clearly in Figure 5. As a consequence each such bushing 38, 40, 42, 44 extends at an inclined angle 50, i.e. upwards.

Each of the first and second star bushings 38, 40 and the first and second delta bushings 42, 44 also protrudes at an angle within a horizontal plane relative to the first side 36, and as a consequence the bushings 38, 40, 42, 44 together adopt a splayed arrangement, e.g. as shown in Figure 2.

In other embodiments of the invention (not shown) one or more of the bushings in a given converter transformer may instead extend at a different angle relative to the first side, or even perpendicularly relative to the first side.

In addition, as shown in Figures 4 and 5, all of the bushings 38, 40, 42, 44 extend into an associated valve hall 12, although this need not necessarily be the case.

## Claims

1. A single-phase three-winding converter transformer (22), for connection with a converter (14) in a valve hall (12) of a HVDC converter station (10), the converter transformer (22) comprising:
a first side (36) which in use faces the valve hall (12);
first and second star bushings (38, 40) protruding from the first side (36) and being connectable in use to one or more further converter transformers (22) and the converter (14) in a star configuration; and
first and second delta bushings (42, 44) protruding also from the first side (36) and being connectable in use to one or more further converter transformers (22) and the converter (14) in a delta configuration,
the first and second star bushings (38, 40) being spaced diagonally relative to one another on the first side (36), and
the first and second delta bushings (42, 44) being spaced diagonally relative to one another on the first side (36).

2. A converter transformer (22) according to Claim 1 wherein the first star bushing (38) lies above and to the left of the second star bushing (40), and the first delta bushing (42) lies above and to the right of the second delta bushing (44), when viewed from opposite the first side (36) of the converter transformer (22).

3. A converter transformer (22) according to Claim 1 wherein the first star bushing (38) lies above and to the right of the second star bushing (40), and the first delta bushing (42) lies above and to the left of the second delta bushing (44), when viewed from opposite the first side (36) of the converter transformer (22).

4. A converter transformer (22) according to Claim 1 wherein the second star bushing (40) lies above and to the left of the first star bushing (38), and the second delta bushing (44) lies above and to the right of the first delta bushing (42), when viewed from opposite the first side (36) of the converter transformer (22).

5. A converter transformer (22) according to Claim 1 wherein the second star bushing (40) lies above and to the right of the first star bushing (38), and the second delta bushing (44) lies above and to the left of the first delta bushing (42), when viewed from opposite the first side (36) of the converter transformer (22).

6. A converter transformer (22) according to any preceding claim wherein the first side (36) of the converter transformer (22) extends vertically relative to a support surface (48) upon which the converter transformer (22) in use lies, and at least one of the first and second star bushings (38, 40) and the first and second delta bushings (42, 44) protrudes at an angle within one or both of a vertical and a horizontal plane relative to the first side (36).

7. A converter transformer (22) according to Claim 6 wherein all of the bushings (38, 40, 42, 44) protrude at an angle within one or both of a vertical and a horizontal plane relative to the first side (36) of the converter transformer (22).

8. A converter transformer (22) according to any of Claims 1 to 6 wherein the first side (36) of the converter transformer (22) extends vertically relative to a support surface (48) upon which the converter transformer (22) in use lies, and at least one of the first and second star bushings (38, 40) and the first and second delta bushings (42, 44) protrudes perpendicularly relative to the first side (36).

9. A converter transformer (22) according to Claim 8 wherein all of the bushings (38, 40, 42, 44) protrude perpendicularly from the first side (36) of the converter transformer (22).

10. A converter transformer (22) according to any preceding claim wherein one or more of the bushings (38, 40, 42, 44) in use extends into an associated valve hall (12).

11. A HVDC converter station (10) comprising a valve hall (12) within which is housed a converter (14) having at least one single-phase three-winding converter transformer (22) connected therewith, the at least one converter transformer (22) including:
a first side (36) which faces the valve hall (12);
first and second star bushings (38, 40) protruding from the first side (36), the said star bushings (38, 40) being connected with the converter (14) and connectable to one or more further converter transformers (22) in a star configuration; and
first and second delta bushings (42, 44) protruding also from the first side (36), the said delta bushings (42, 44) being connected with the converter (14) and connectable to one or more further converter transformers (22) in a delta configuration,
the first and second star bushings (38, 40) being spaced diagonally relative to one another on the first side (36), and
the first and second delta bushings (42, 44) being spaced diagonally relative to one another on the first side (36).

12. A HVDC converter station (10) according to Claim 11 wherein the converter (14) has three single-phase three-winding converter transformers (22) connected therewith, each converter transformer (22) including:
a first side (36) which faces the valve hall (12);
first and second star bushings (38, 40) protruding from the first side (36), the said star bushings (38, 40) being connected with the converter (14) and both of the other converter transformers (22) in a star configuration; and
first and second delta bushings (42, 44) protruding also from the first side (36), the said delta bushings (42, 44) being connected with the converter (14) and both of the other converter transformers (22) in a delta configuration,
the first and second star bushings (38, 40) being spaced diagonally relative to one another on the first side (36), and
the first and second delta bushings (42, 44) being spaced diagonally relative to one another on the first side (36).
